# EUROPEAN PATENT SPECIFICATION

(11) **EP 1 800 542 B1**
(45) Date of publication and mention of the grant of the patent: **29.07.2009**
(21) Application number: 06126124.4
(22) Date of filing: 14.12.2006
(51) Int. Cl.: A23C 19/14, A01J 27/00

(54) **Process and device for removing the plastic coating from cheese**
Prozess und Gerät zur Entfernung der Plastikbeschichtung von Käse
Processus et dispositif pour retirer le revêtement en plastique du fromage

(30) Priority: 22.12.2005 NL 1030746
(43) Date of publication of application: 27.06.2007
(73) Proprietor: Campina Nederland Holding B.V., 5301 LB Zaltbommel (NL)
(72) Inventor: Faber, Timo Joost, 4811KB Breda (NL); Bouman, Johannes, 3904GZ Veenendaal (NL)
(74) Representative: Swinkels, Bart Willem

(56) References cited:
- EP-A- 0 949 158
- DE-A1- 19 735 595
- FR-A- 1 437 562
- NL-A- 8 802 823

## Description

### Background description

The invention relates to an improved process for removing the plastic coating from a ripened cheese before cutting it into slices, to slices of ripened cheese obtainable in this way, and to a device for carrying out said process. The invention further relates to cheese that has been given a reinforced cheese coating to ensure that the cheese coating can be conveniently removed by the improved process.

Cheesemaking basically involves the standardization and thermal treatment of milk, followed by the coagulation or clotting of milk, the cutting of the junket or curd, the separation of the whey and the curd from each other, the pressing of the curd into cheese form, the salting of the cheese obtained, and finally ripening. The duration of ripening can vary from 4 weeks in the case of slightly ripened or immature cheese to over a year for well ripened or mature cheese, called respectively "young" and "old" in The Netherlands.

To ensure satisfactory ripening, the salted cheese is provided with a protective coating, called "cheese coating" or - as here - "plastic coating", prior to the ripening stage. US-A-2005/107,515 gives a list of suitable cheese coating materials, which are mostly based on vinyl ester homopolymers or copolymers, especially polyvinyl acetate (PVA). This plastic coating has several functions, such as for example a) to prevent the cracking of cheese when its shape or volume changes, b) to prevent the adhesion of the cheese to the shelves or boards in the ripening rooms, c) to reduce the moisture loss from the cheese to its surroundings, and d) to protect the cheese from moulds. To ensure that the ripening is not distorted, the plastic coating must be permeable to moisture and gases.

The application of this plastic coating is called "plasticizing", and is e.g. described in EP-A-1.121.862. What generally happens in practice is that a 45% aqueous emulsion of polyvinyl acetate-dibutyl maleate (PVA)is spread onto the cheese, typically in an amount of approximately 40 g/m² at a time. About 95% of the water evaporates from this emulsion after one day of drying, leaving behind a solid, continuous adhering PVA layer on the cheese. This plasticizing process is repeated several times for both sides of the cheese during ripening, the number of applications depending on the duration of the latter.

When the ripening is finished, the cheese is mostly cut into flat slices, which can be directly used in a sandwich after opening the pack. However, these slices of cheese are sold without the inedible plastic coating that is needed during the ripening stage. For this purpose, the plastic coating is usually removed with the aid of a scraping or "shaving" tool, such as described e.g. in DE-A-3305668. However, this operation removes not only the plastic coating, but also the edible dry rind formed on the body of the cheese. This operation is therefore also called "rind removal" and involves the loss of a relatively large amount of product as waste. This amount is 5.5-7% in a manual rind removal operation, but can be reduced to 3.5% when the operation is automated. The use of a grinding tool produces a particularly large amount of dust, which can be unhygienic and even represent a health risk.

This problem of losing edible rind and cheese is partly solved in NL-A-8.802.823, in which the cheese with its plastic coating is first warmed up preferably on its surface, by exposing it to warm air, and the cheese is then either sliced or trimmed by shaving. However, this patent does not specify the temperature used, and moreover the process still comprises the rind removal operation mentioned above, with all its disadvantages. The use of solvents offers an alternative method for removing the plastic coating from cheese but is generally considered undesirable, especially in contact with food.

It should be mentioned here that the removal of the plastic coating should not be confused with the opening of the protective cover that does not adhere to the cheese under it and is made e.g. of a waxy material, as described in EP-A-949.158. Such a waxy coating, known e.g. from the Babybel cheese line, provides the cheese with a layer that is impermeable to moisture and gases and is therefore completely unsuitable for ripening the cheese in the usual way. Furthermore, the waxy cover hardly adheres to the cheese at all. Similarly, FR-A-2.774.556 discloses a process for reinforcing soft cheese with an enclosing (and thus non-adhering) cover that can be simply pulled off. FR-A-1.437.562 also relates to the removal of an inedible cheese cover from soft cheese. However, this is not a top layer of the kind involved in the invention, as can be seen from the fact that it may be made e.g. of paper or metal, it is specially perforated and it does not adhere to the rind under it. Finally, DE-A-197 35 595 discloses a device for removing the casings from cheese or sausage. After making a preliminary cut, the rind or casing is removed by a rotating knurled blade. However, these are really casings, and the problem of adhesion between the coating and the lower layer does not exist there. Therefore, the solutions to remove the enclosing disclosed in the above patents (EP-A-949.158, FR-A-2.774.556, DE-A-197 35 595 and FR-A-1.437.562) are not suitable for use where the plastic coating adheres to the rind, which is the main problem under consideration.

NL-A-8.802.823 discloses a process for removing rind from cheese, different from conventional scraping in order to reduce the amount of product wasted and to provide a simpler and more complete rind removal. For this purpose, the cheese with its rind is heated to a "required temperature" in a hot-air tunnel or processing tunnel. However, the patent publication does not specify the required temperature. The rind portion is stripped off after the heating operation, starting with the outer layer. However, the disadvantage here is that the heating is not limited to the plastic coating but extends to the cheese under it, and causes fat to separate out on the rind. Furthermore, the treatment with hot air softens the cheese too much to be able to slice it easily in the next stage.

The aim of the present invention is therefore to provide an improved process for the simple and rapid removal of the conventional plastic coating from cheese, which can be automated and carried out without the use of additional agents such as solvents and/or without any deleterious effect to the final characteristics of the cheese.

It is also an aim of the invention to provide a reinforced plastic coating, which is easier to remove and ensures the least possible interference with the ripening process, the logistic chain of operations, and the conditions for slicing the cheese.

### Description of the invention

It has been found that, in order to solve the above problem, the plastic coating protecting the cheese during the ripening stage can be removed not by scraping or "shaving", which increases the waste and produces comminuted material (dust), but by peeling it off, i.e. by applying a tensile force to it in the case of cheese covered with it, as is also described in NL-A-8.802.823.

However, the coating must be sufficiently stiff if it is to be peeled off a coated cheese. The coating must not crumble during the peeling operation and preferably should not exhibit excessive stretching either. When the process is used for cheese on an industrial scale, the ambient temperature is generally 4-7°C, i.e. it is below the glass temperature of the coating plastic, which is about 10-13°C. However, the coating ruptures too soon if the processing temperature is below the glass temperature.

To exemplify, a plastic coating should meet the following requirement if its removal by peeling from the cheese is to be successful:
F_{adhesion} < F_{peeling} < Fᵣᵤₚₜᵤᵣₑ
where F_{adhesion} is the minimum force needed to remove the plastic coating from the cheese (including the edible rind)
F_{peeling} is the force exerted on the plastic coating in order to peel it off the cheese, and
Fᵣᵤₚₜᵤᵣₑ is the maximum force before rupture, i.e. the force the coating can withstand before it is torn.
The Fᵣᵤₚₜᵤᵣₑ and F_{adhesion} values are intrinsic properties of the cheese covered with the plastic coating. Fᵣᵤₚₜᵤᵣₑ varies with the mechanical properties of the coating plastic, and F_{adhesion} varies with the degree of adhesion between the plastic coating and the cheese. In particular, Fᵣᵤₚₜᵤᵣₑ varies with the temperature and has too low a value below the glass temperature of the coating plastic.

This problem cannot be solved directly by the hot-air treatment according to NL-A-8.802.823 without knowing the required temperature, which is not specified there. In addition to the problems listed in the Introduction to the description, this process cannot always be controlled in practice, and it can lead either to too low or to too high a temperature. If the temperature is too high, the plastic coating melts and stretches too much, so it is impossible to be peeled off. The force needed for a 10% elongation (F_{elongation}) is used as a measure in this context. Peeling is only feasible commercially if this F_{elongation} is greater than the peeling force. F_{elongation} is an intrinsic property of the cheese covered with a plastic coating. F_{elongation} depends on the mechanical properties of the plastic coating and is equal to the force that has to be exerted on the coating in order to increase its length by 10% in comparison with its initial length. If we have a plastic-coated cheese for which this balance of forces is ensured, we can peel it without the coating being torn, fractured and/or stretched too much, as will be illustrated in more detail in the examples.

The invention therefore relates to a process for removing the plastic coating from cheese by peeling, which process comprises the following steps: a) ripened cheese with a plastic coating that is suitable for use in ripening is provided, where the "force before rupture (Fᵣᵤₚₜᵤᵣₑ) of the plastic coating is greater than the force of adhesion (F_{adhesion}) between the said plastic coating and the cheese, and b) the coating is peeled off the cheese with a peeling force (F_{peeling}) that is greater than the force of adhesion (F_{adhesion}) but lower than the force before rupture (Fᵣᵤₚₜᵤᵣₑ),
where the plastic coating also has a force for a 10% elongation F_{elongation} that is greater than the peeling force (F_{peeling}), and
the temperature of the plastic coating during the peeling operation in Step b) is higher than the glass temperature of the plastic coating but lower than 30°C.

The advantages of the process according to the invention are that it is quick and simple, can be carried out automatically or semi-automatically, so it is less labour-intensive, and the cheese rind losses are reduced without having to use an additional solvent, which is undesirable.

It has been found that all this can be achieved if the plastic coating is subjected to IR heating before the peeling operation. The plastic coating can be reinforced with a top layer either instead of or in addition to IR heating, both these variants being discussed in more detail below.

The process of the invention can be used with any semi-hard or hard naturally ripened cheese that is provided with a plastic coating for the ripening period. We are not talking here about foil-ripened cheese, as described e.g. in EP-A-1.287.744, because such a foil is not an adhering layer, whereas the cheese in a plastic coating according to the invention has an adhering layer whose force of adhesion (F_{adhesion})which by definition is greater than zero. The waxy or other cheese covers and casings described in the Introduction to the description are also excluded here.

A cheese of basically rectangular shape, such as the "Euro-block", is eminently suitable for the removal of the plastic coating from it by the peeling process. The "Euroblock" is a rectangular block of cheese, measuring about 50 x 30 x 10 cm, which is often used in cheesemaking. However, the peeling also works with other types of cheese, whether they have one or more surfaces.

The plastic coating can be any kind of conventional plastic coating that is suitable for protecting the cheese during ripening, such as for example those described in US-A-2005/107,515, prepared from an aqueous dispersion or emulsion of a polyvinyl ester, e.g. a vinyl acetate homopolymer or copolymer. This plastic coating must not be fully impermeable to moisture and gases, because the moisture and gases produced would interfere with the ripening process. Waxy substances, such as paraffin wax for example, are unsuitable, because they are completely impermeable to moisture, which is undesirable for ripening. The thickness and therefore the strength of the coating layer depend on the duration of the ripening period envisaged. The thickness of the plastic coating must therefore be considered to be a fixed magnitude when looking for plastic coating materials that can be peeled off. A slightly ripened ("young") cheese needs a relatively thin plastic coating, weighing typically about 200 grams per square metre of surface area in the dry state, while the corresponding figure is about 500 g/m² in the case of a well ripened ("old") cheese. The everyday activities of the average person skilled in the art will allow him to choose the right plastic coating, apply it correctly and know the intensity and frequency with which the coating process has to be carried out.

As mentioned above, the plastic coating on many ripened cheese types is not directly peelable, because either F_{elongation} or Fᵣᵤₚₜᵤᵣₑ or both fail to satisfy the set conditions for peelability. To facilitate peeling in every case, the temperature of the plastic coating during the peeling operation in Step b) should preferably be 15-25°C, most preferably above 20°C and especially about room temperature. Furthermore, the temperature at any point over the cross section of the plastic coating should be within the range stipulated according to the invention, i.e. both on the top of the plastic coating and where the plastic coating adheres to the cheese rind below it.

By using an IR heating method for the coated cheese, the warming of the cheese in the bulk under the coating is avoided. It has been found that a rapid high-power IR treatment gives excellent results. The IR heating is preferably carried out at a power or output of 60-80 kW/m² for 0.5-5 seconds and preferably 1-3 seconds.

Preferentially such a high-power IR treatment is followed by IR heating at 5-10% of said power, preferably for a period of 5-30 seconds, in order to maintain the required temperature of the coating during further processing. This follow-up treatment is included in the term "IR heating" or "IR heat treatment" used here.

The surface heating achieved by this IR heat treatment is illustrated by the fact that the temperature of the cheese during this treatment is less than 15°C, preferably less than 12°C and especially less than 10°C at a depth of 3 mm from the meeting point between the plastic coating and the rind, This depth is generally inside the rind. The temperature in the actual body of the cheese is preferably not significantly different from the normal cheese processing temperature, since any detrimental effect of heating can then be avoided. Therefore, the temperature during the IR heating and the subsequent peeling is preferably less than 2 °C, more preferably less than 1 °C above the cheese processing temperature at a depth of 5 mm; less than I °C and preferably less than 0.5 °C above the cheese processing temperature at a depth of 7 mm; less than 0.5 °C above the cheese processing temperature at a depth of 8 mm. At a depth of greater than 15 mm the temperature does not deviate from the cheese processing temperature. These values of course apply to those points in the cheese where the plastic coating has not been peeled off yet.

Since the required mechanical properties Fᵣᵤₚₜᵤᵣₑ, F_{elongation} and F_{adhesion} depend both on the ripening time and on the type of plastic coating used, they cannot be defined here numerically without unnecessarily narrowing the scope of the invention. However, the person skilled in the art can directly and unambiguously determine the actual mechanical properties by carrying out a simple peeling and tensile test.

In a peeling test, a coated cheese sample is provided in such a way as to ensure a length/width ratio of 6:1, and the coating is partly removed from it by hand in such a way that the loose piece of coating, which is still connected to the rest of the coating still adhering to the cheese, can be fixed in the top clamp of a tensile testing apparatus. The coating that has been removed from the rind by hand is then fixed in the bottom clamp and the coating is subsequently pulled upwards by the tensile tester, so that it becomes further detached from the rind. The force needed for this gives the value of F_{adhesion}. The value of F_{adhesion} is the highest value found in five such peeling test measurements, normalized over the cross section of the test piece (unit: N/mm).

The same method is used to determine Fᵣᵤₚₜᵤᵣₑ and F_{elongation} in a tensile test using a completely detached coating with a length/width ratio of 6.7:1. The value taken for either Fᵣᵤₚₜᵤᵣₑ or F_{elongation} is the minimum value found in five peeling tests, and normalized over the width of the test piece, in accordance with the method for F_{adhesion}.

To be able to compare the results of peeling and tensile tests with the values obtained here, the measurements should be carried out at a pulling speed of approximately 10 mm/sec and at a temperature of 21 °C.

A suitable device for carrying out the peeling and tensile test is the Texture Analyser TA-XT2 (Stable Micro Systems, Great Britain), which is equipped with tensile grips. The examples given below show the results of these measurements processed for various types of cheeses.

It should be noted here that the person skilled in the art need not repeat these tensile tests in exactly the same way or use the same tensile testing apparatus and/or the conditions specified here, provided that the various forces are determined in the same way, since these forces are connected with one another in the context of the present invention. Since F_{adhesion}, Fᵣᵤₚₜᵤᵣₑ and F_{elongation} vary with the temperature, it is particularly important to measure these values at the same temperature at which the peeling is also carried out.

Under these conditions and at ambient temperature, preferably 21°C, the adhesive force of a plastic coating is in the range of 0.2-0.9 N/mm, wherein the cheese coating present on a well-ripened ("old") cheese adheres stronger than the coating layer of a slightly ripened ("young") cheese. Thus, the force of strength of adhesion is generally about 0.2-0.3 N/mm in the case of a slightly ripened and a slightly ripened mellow ("jong" and "jong belegen", respectively) Gouda cheese, about 0.6-0.7 N/mm in the case of a medium-ripened mellow ("belegen") Gouda cheese, and about 0.6-0.8 N/mm in the case of an extra-ripened mellow ("extra belegen") Gouda cheese. In the case of Milner cheese, the value is in practice 0.3-0.4 N/mm for an extra ripened type, 0.5-0.6 N/mm for a slightly ripened one, and 0.8-0.9 N/mm for a fully ripened one. The anomalous value for extra-ripe Milner cheese is due to the fact that the last stage of the ripening process takes place in foil here.

In order to carry out the peeling easily and quickly, it is best to have a safety margin between the adhesive and peeling forces on the one hand, and the Fᵣᵤₚₜᵤᵣₑ and F_{elongation} values on the other hand, since this buffers for inhomogeneities that may occur in the plastic coating. The force before rupture (Fᵣᵤₚₜᵤᵣₑ) should preferably be at least 1.5 times and especially at least twice the F_{adhesion} value. Furthermore, the F_{elongation} should preferably be at least 1.5 times and especially at least twice the F_{adhesion} value. More especially, Fᵣᵤₚₜᵤᵣₑ and F_{elongation} should also be at least 1.5 times and preferably twice the F_{peeling} value. A high Fᵣᵤₚₜᵤᵣₑ value is important, because it prevents the plastic coating from tearing or breaking during the peeling process. A low F_{elongation} value also hampers the process, because it makes it more difficult to peel off the coating or even to roll it up automatically, and it additionally increases the risk of tearing as the coating becomes thinner and thinner.

The plastic coating can be reinforced with the aid of a top layer either instead of or in addition to the heating of the plastic coating according to the invention, so that Fᵣᵤₚₜᵤᵣₑ and F_{elongation} are both increased. Since this reinforcement takes place on the outside of the coating, it hardly affects the value of F_{adhesion}. Theoretically, this can also be combined with a heating method other than IR heating, but it is obvious from what has been said above that its combination with the IR heating described here is preferred.

It is in principle possible to increase the amount of material used for the plastic coating and so apply a thicker PVA layer to the cheese. The drying time of the extra PVA layer is at least a day, and this drying should preferably be carried out already during the ripening stage. Furthermore, this solution calls for extra plasticizing actions, because the amount of plastic applied on each occasion cannot exceed a certain value. The top layer can be formed in the usual way, i.e. by applying an aqueous PVA emulsion with the aid of a squirting device and then allowing it to dry. In one of the embodiments, the top layer is therefore made of the same material as the plastic coating under it, which is normally applied during the ripening period. In this embodiment, the cheese is preferably provided with a PVA layer whose thickness - especially in the case of slightly ripened and ripened mellow ("jonge en belegen") Gouda cheese - is at least 150% of the thickness of the PVA layer applied to this type of cheese normally, the usual thickness of the PVA layer being specified above. An advantage of this method is that this top layer is made of a food-grade material and makes it unnecessary to introduce a new material into the cheesemaking process.

A disadvantage of this method is that the materials involved are relatively expensive. It is not clear during the ripening stage which cheese is destined for slicing, so that the relatively expensive PVA emulsion is unnecessarily also applied to cheese that will not be sliced.

In an alternative embodiment, the plastic coating is therefore reinforced with a top layer that is made of a material other than that used for the plastic coating itself, while ensuring that the intrinsic characteristics, F_{elongation} and Fᵣᵤₚₜᵤᵣₑ, of the plastic coating provided with a top layer still meet the requirements described before. This top layer can be applied quickly, so one can wait with its application until just before slicing, when the ripening of the cheese is complete and it finally becomes clear which cheese is destined for cutting into slices.

In this embodiment, the plastic-coated cheese is reinforced with a top layer before Step a) is carried out. The top layer adheres here to the plastic coating with a force of attachment F_{sticking} that is greater than F_{adhesion}, being preferably at least 1.5 times and especially at least twice as great as the latter. The relationship between P_{sticking} and F_{peeling} is less important here. A plastic coating with a top layer is referred to below as "reinforced plastic coating" in contradistinction to untreated plastic coating. The above mentioned forces F_{elongation} and Fᵣᵤₚₜᵤᵣₑ then also apply to the reinforced plastic coating. This reinforcing top layer needs less than 15 minutes to prepare and dry, and the cheese is preferably peeled immediately after the top layer is applied to its plastic coating.

The force of attachment F_{sticking} is defined as the force needed to remove the top layer from the plastic coating. This force can also be determined with a tensile tester in a simple way, using the same method as that described above for the other forces. F_{sticking} is the minimum value found in five measurements. It is sufficient in practice to determine whether the F_{sticking} value of a reinforced top layer is greater than the F_{adhesion} value, i.e. whether the plastic coating will become detached from the cheese, or the top layer will become detached from the plastic coating during a tensile test. It is only in the first case that the reinforced plastic coating is suitable for peeling according to the invention.

The following are important criteria when choosing suitable materials for the top layer:
- high Fᵣᵤₚₜᵤᵣₑ/weight ratio
- high F_{elongation}/weight ratio
- food-grade quality, and
- sufficient adhesive and sticking force. Therefore attention is drawn to the ability to cross-link.
   Furthermore, the material preferably should not be expensive or liable to creasing during application.

In one of the embodiments, this top layer can be applied directly to the plastic coating by sealing, i.e. by a process in which the top layer is pressed onto the plastic coating and is induced to undergo physical and/or chemical cross-linking, for which a high temperature may be needed. Such sealing techniques are well known to the person skilled in the art.

In another method, a layer of adhesive is first applied in order to ensure the required cross-linking to both the plastic coating and the reinforcing material. In another embodiment, the top layer therefore includes a layer of adhesive, with the reinforcing material - preferably a film - over it, so the adhesive layer is in contact with the plastic coating lying on the cheese. Examples of suitable top layers are polyolefin films made e.g. of polyethylene, polypropylene or combinations or derivatives thereof, which are glued to the plastic coating on the cheese with the aid of a hot-melt adhesive. The required thickness of the film is from 10 g/m² to 30 g/m², where the lower value depends of the operator's ability to handle the film during its application to the cheese, while the higher value depends on the cost of the film per cheese. To ensure that the film that is stuck to the plastic coating has favourable force/elongation characteristics and that the F_{sticking} > F_{adhesion} condition is fulfilled, the film must be made to bind well with the aid of an intermediate layer of adhesive, e.g. of the hot-melt type. The same requirement of course also applies to the force of attachment between the adhesive and the film layer that is used for the required reinforcement.

The top layer preferably includes a hot-melt adhesive and has the above mentioned film over it. The hot-melt adhesive is applied before cutting the coating off the cheese. A self-adhesive food-grade hot-melt adhesive marketed by Dinxperlo in the Netherlands under the trade name of Saba is an example of suitable products that can be used for this purpose. It is first heated and then applied to the plastic coating, e.g. by spraying. If Saba is used, a thickness of 30-40 g/m² is suitable. Spraying cools the hot-melt adhesive. A film can be placed on the cheese shortly - typically a few seconds - after the application of the hot-melt adhesive. As an alternative, the hot-melt adhesive is first applied to the film with the aid of a roller, and then the tacky film is applied to the plastic coating.

To facilitate the peeling of the plastic coating from the cheese and to avoid having to determine in advance whether the plastic coating meets the necessary requirements, any plastic-coated cheese destined for slicing can be fitted with a top layer, whether or not this carries a layer of adhesive, so that the cheese in question may be peeled out of its plastic coating without anything else being necessary. With a cheap material that can be applied quickly, this top layer is more attractive than the application of an extra-thick PVA layer to all cheeses.

In the preferred case, the top layer is so chosen that the Fᵣᵤₚᵤₜᵤᵣₑ value is guaranteed to be greater than 0.9 N/mm and preferably greater than 1.25 N/mm, so that any type of cheese can be peeled. The F_{elongation} value is preferably greater than 0.9 N/mm, preferably greater than 1.25 N/mm, and especially greater than 2.5 N/mm. These values apply to the maximum adhesive strength as measured in the case of ripened Milner cheese.

The peeling can be carried out either by hand or by machine. When it comes to peeling, the cheese carrying a plastic coating is preferably divided into a number of separate surfaces. If the cheese is shaped like a block, the horizontal edges are preferably shaved off, so that the plastic coating is broken up, and three separate pieces are formed from it, namely a first part (consisting of the front, back and two sides of the cheese), a second part (consisting of the top), and a third part (consisting of the bottom).

The first part or portion is then removed by using a first blade for making an incision parallel to, and over the whole length of, the edge in question, near one of the vertical edges, at a distance of preferably 1 cm.

The plastic coating is then subjected to a tensile force at this incision in order to remove it from this first part, the tensile force applied being equal to F_{peeling}. The cutting and pulling described here are then repeated with the other parts or portions. It is of course possible to choose another sequence for peeling off the various parts. It is best to carry out at least the pulling process by a machine, preferably by rolling up the coating, and it is in fact best to carry out the cutting and the tensile action with the aid of a machine.

The invention therefore also relates to a device for removing the plastic coating from coated cheese, which device comprises a peeling tool for exerting a tensile force on the said plastic coating. The peeling tool can be mounted in such a way that it grips the plastic coating on both sides when it is in operation.

In one of the embodiments according to the invention the device comprises a cutting tool for cutting off a part or portion of the plastic coating when it is in operation. In this way, the peeling tool can simply pick up the cut-off part of the plastic coating and then peel the rest of the coating off the cheese. Preferably a narrow strip of the plastic coating is cut off here in such a way that it projects from the now partially exposed cheese. This helps the peeling tool to pick up the part or portion of plastic coating that has been cut off the cheese, this strip preferably having a width of 1 cm.

In one of the embodiments according to the invention, the device comprises a rupturing tool to cut the plastic coating in such a way during use as to form separate parts or portions of the coating. This rupturing tool can be e.g. a plane, a blade, a perforator, a laser or any other means known from the prior art for rupturing the coating. To split the plastic coating into parts or portions, the rupturing operation can be done continuously, e.g. when a plane is used, or discontinuously, e.g. when perforating the plastic coating along a number of lines lying at a certain distance from one another.

To regulate the peeling-off of the plastic coating, the peeling unit can comprise a tensile force regulator for controlling the tensile force exerted by means of the peeling unit. The peeling unit can also comprise two essentially parallel rollers. For the peeling operation itself, the coating is inserted between the two rollers, which are then pressed together, and at least one of them is then set in motion. In this case, the tensile force regulator sets the moment force that the drive unit of the roller imparts to the roller in question. In another embodiment of the peeling unit, any force regulating system that is known from the prior art and which cooperates with a drive unit can be used to control the tensile force applied.

In an embodiment according to the invention, the device comprises means of heating for warming the plastic coating when in operation. These means of heating can comprise infrared radiators.

The method of peeling used will leave its trace on the finished product, namely the packed, peeled cheese slices. The cheese slices according to the invention exhibit a "drying edge", i.e. a part with a marked colour gradient at the edge of each slice. The colour gradient is caused by drying and is a feature of naturally ripened cheese. This drying edge is due to the loss of moisture during ripening. The presence of a drying edge is considered attractive by cheese buyers, since naturally ripened cheese is generally preferred over foil-ripened cheese, which largely lacks this drying edge. Naturally ripened cheese that is trimmed or "shaved" with a plane also has such a drying edge originally, but it is removed by the trimming operation, so it is not obvious at a glance that the slice of cheese is a naturally ripened product. The peeling therefore helps the consumer to identify the origin of the product.

In the case of cheese ripened for about 12 months, this gradient covers a wider area of the cheese slice than in the case of cheese ripened e.g. for about 1 month. The width of the area with the colour gradient varies from 3 mm to 10 mm and is preferably at least 5 mm.

The thickness of the drying edge can be determined by taking a photocopy of a cheese slice with a thickness of 1-10 mm. The picture should be taken without contour reflection, i.e. the reflection plate normally present in the photocopier should be open when the copy is taken. The drying edge then shows up as a clearly visible strip that is darker than the central part of the image of the slice in the photocopy. The thickness of the drying edge can be easily measured on this picture.

In contrast to cheese trimmed with a plane, the peeled cheese slices according to the invention can also be identified as a repeating milled edge pattern. When the junket or curd is pressed, a wavy pattern is produced that persists even after further treatments, e.g. when the plastic coating is applied. Although foil-ripened cheese also exhibits this milled pattern, peeled cheese differs in that the peeling removes part of the cheese on one side at each milling line, so that the milling ceases to be symmetrical.

The cheese slices obtained according to the invention are also different from those treated with a solvent, where the symmetry of the milling pattern is also retained, just as in the case of foil-ripened cheese. Furthermore, residues of the solvent used are left behind in the cheese. Substances dissolved out of the plastic coating can also be deposited on the bare cheese, which can partly produce e.g. a red discolouration at the edge of the cheese.

The invention therefore also relates to peeled slices of cheese with a repeating asymmetric milled edge pattern and a drying edge extending over 3-10 mm and preferably over at least 5 mm.

The invention also relates to the separate features specified in the sub-claims and not taken in combination with the main claims. The invention is illustrated in more detail below with the aid of examples and drawings.

### FIGURES

**Fig. 1a** is a schematic perspective drawing of a cheese in the form of a block.
**Fig. 1b** is a schematic cross-sectional view taken along line I-I in the cheese shown in Fig. 1a, with the plastic coating being divided into separate parts or portions of the coating.
**Fig. 2a** is a schematic side elevation of an embodiment of the device according to the invention, including a cheese shown in Fig. 1b that has been provided with a plastic coating.
**Fig. 2b** is a schematic side elevation of the device shown in Fig. 2a in the situation in which a part or portion of the plastic coating is seized by the peeling tool.
**Fig. 2c** is a schematic enlarged view of a part of the device shown in Fig. 2a, in the situation in which part of the plastic coating is cut off.
**Fig. 2d** is a schematic cross-sectional view taken along line II-II in Fig. 2b, in the situation in which a part of the plastic coating is peeled off the cheese.
**Fig. 3a** is a schematic side elevation of another embodiment of the device according to the invention.
**Fig. 3b** is a schematic cross-sectional view taken along line III-III in Fig. 3a.
**Fig. 3c** is a schematic side elevation of the device shown in Fig. 3a.

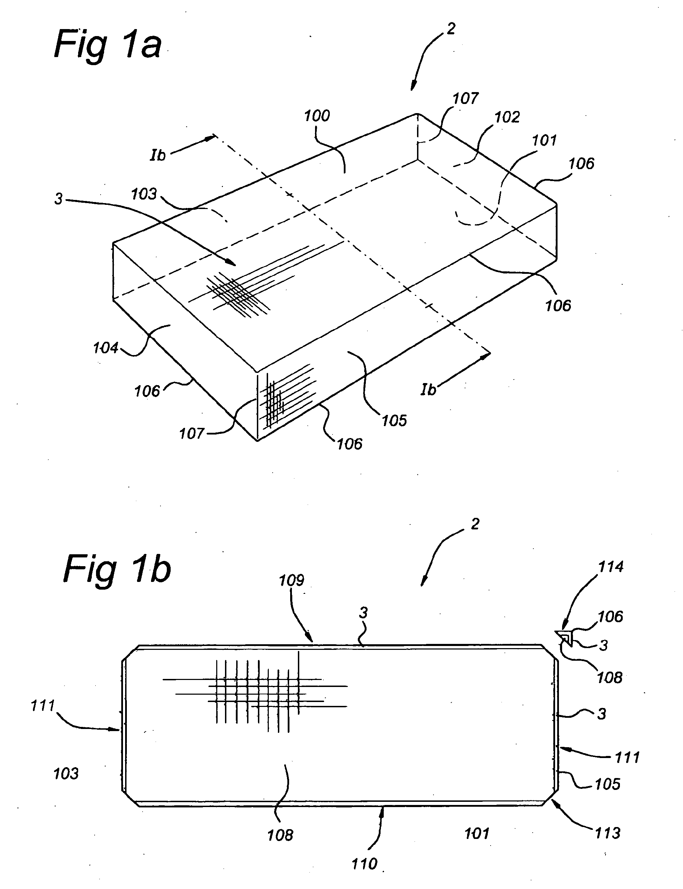

**Fig. 1a** shows a block of cheese 2 with a top surface 100, a bottom surface 101, and a first, second, third and fourth lateral surface 102, 103, 104 and 105, respectively. Both the top surface 100 and the bottom surface 101 are bounded by four horizontal edges 106. Each of the lateral surfaces 102, 103, 104 and 105 is bounded by two horizontal edges 106 and two vertical edges 107. The cheese 2 is fully covered by its plastic coating 3, extending over its top surface 100, bottom surface 101 and the lateral surfaces 102, 103, 104 and 105.

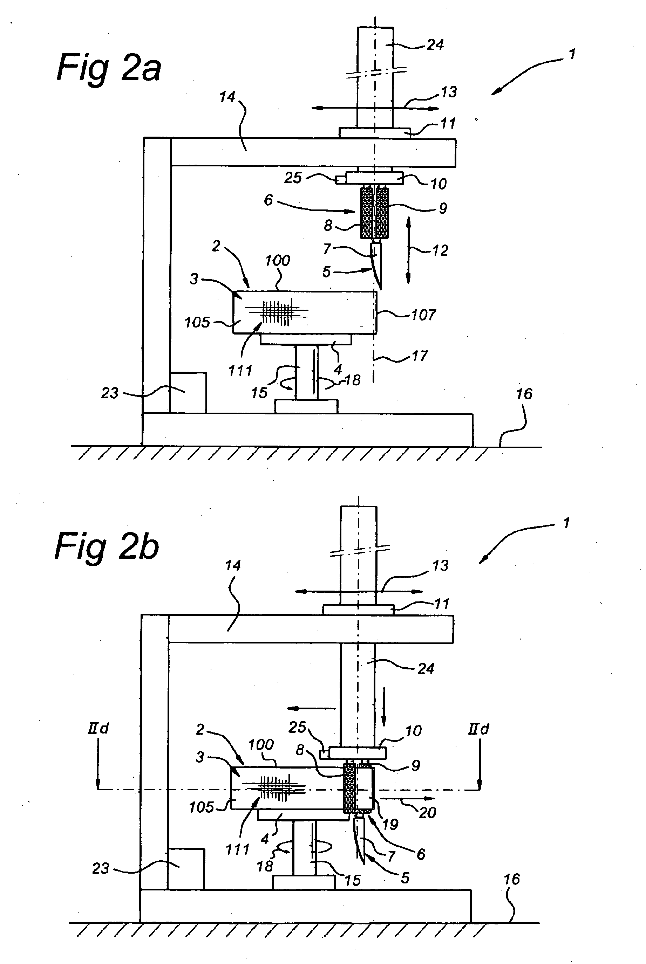

**Fig. 1b** shows a cross section taken along line I-I of the cheese shown in Fig. 2a. The drawing shows the bulk or body 108 of the cheese 2 and its plastic coating 3 divided into three separate coating portions 109, 110 and 111. The division of the plastic coating 3 is such that the latter is ruptured along all its horizontal edges 106. The severance at 103 is achieved by removing part 114 of the cheese 2 along all its horizontal edges 106, the said part having been trimmed off with a plane that is not shown. This gives rise to a first coating portion 109 (formed by the top surface 100), a second coating portion 110 (formed by the bottom surface 101), and a third coating portion 111 (formed by the lateral surfaces 102, 103, 104 and 105).

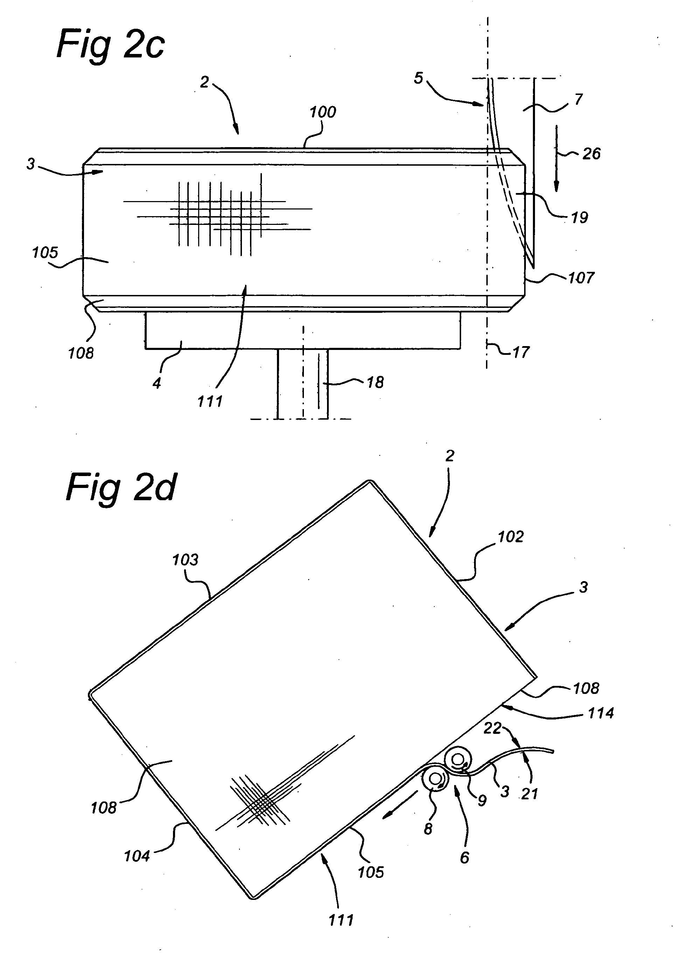

**Fig. 2a** shows a device 1 for peeling the plastic coating 3 off the cheese 2 shown in Fig. 1b, and specifically a device for peeling the coating off the lateral surfaces 102, 103, 104 and 105 (the third portion of the coating 111). This device comprises a first supporting plate 4 on which the cheese block 2 is placed. The supporting plate 4 rests on a first support 15, which rotates in the direction of the rotational arrow 18, and which in turn rests on a solid outside surface 16. The device 1 comprises a cutting unit 5 for removing part of the third portion of coating 111 from the plastic coating 3. This cutting unit 5 comprises a blade 7, positioned above the top surface 100, near one of the vertical edges 107 of the fourth lateral surface 105. The device also comprises a peeling unit 6 which is connected to the cutting unit 5 and lies in a line which is the continuation of the cutting unit 5. The peeling unit 6 comprises a first roller 8 and a second roller 9, which are parallel to each other and are coupled with a roller drive 10 that actuates both rollers 8 and 9. This roller drive 10 can also move the rollers 8 and 9 between a first position and a second position, where in the first position the rollers are at a certain distance from each other, as shown in Fig. 1a, while in the second position the rollers 8 and 9 are pressed together, as shown in Fig. 2b and Fig. 2d. The roller drive 10 is fixed to a guide 24, which is in turn coupled with a guide support 14 via a guide drive 11, and the guide support 14 in turn rests on a solid outside surface 16. The guide drive 11 is for moving the guide 24 to and from the support plate 4, so the cutting unit 5 and the peeling unit 6 move in the direction of the arrow 12. Another function of the guide drive 11 is to change the position of the guide 24 along the guide support 14, together with the cutting unit 5 and the peeling unit 6. The direction of this displacement is indicated by the arrow 13. The device 1 comprises a control system 23 that regulates the roller drive 10 and the guide drive 11. The roller drive 10 and the guide drive 11 are connected to the control system 23 by a communication channel (not shown). To use the cutting unit 5, the blade 7 is moved in the direction of the cheese 2 resting on the first supporting plate 4. The blade 7 is now in its fixed initial position with respect to the supporting plate 4. The latter comprises a cheese-positioning tool (not shown), which moves the cheese 2 positioned on the supporting plate 4 in such a way that the blade 7 can cut off a narrow strip (19 in Fig. 2b and Fig. 2c) from the plastic coating 3 along one of the vertical edges 107 of the fourth lateral surface 105 when the cutting unit 5 is displaced towards the cheese 2 in the direction of the arrow 12. When this strip of the plastic coating 3 has been cut loose, it still remains connected to one side of the cheese 2. The blade 7 is therefore moved along the first line of displacement 17 until it reaches its final position, shown in Fig. 2b. Since the peeling unit 6 is displaced in the same direction when the cutting unit 5 is moved, the part 19 cut off from the plastic coating 3 by the blade 7 is taken up between the two rollers 8 and 9, which are at a certain distance from each other.

**Fig. 2b** shows the blade 7 in its final position, in which the part 19 cut off is taken up in its entirety between the rollers 8 and 9, which are then moved by the roller drive 10 in such a way that these rollers 8 and 9 are pressed together. Since the part 19 cut off is now between the rollers 8 and 9, the plastic coating 3 of the cut-off part 19 is clamped between the rollers 8 and 9. The roller drive then turns the rollers 8 and 9, so that the plastic coating 3 is passed through between the rollers 8 and 9, and the cut-off part 19 of the plastic coating 3 is moved in the direction shown by the arrow 20. A tensile force (F_{peeling}) is exerted here on the plastic coating 3 in order to peel it off. This removes the third portion 111 of the coating, so that the cheese 2, placed on the supporting plate 4, which is in turn supported rotatably, is turned in the direction shown by the rotational arrow 18. In order to hold the peeling unit 6 at a constant distance from the lateral surfaces 102, 103, 104 and 105 of the cheese 2 during the rotation of the latter, the device is fitted with a visual sensor 25, which is connected to the control system 23 via a communication channel (not shown). Using the information generated by this sensor 25, the control system 23 makes the guide drive 11 move the guide 24 with the peeling unit 6 in the direction of the arrow 13. As an alternative that can be used with cheese of standard measurements, with the cheese 2 resting on the first supporting plate 4 in the initial position, a sensor is used to record the angle of rotation as the first supporting plate 4 is turned with the cheese 2 on it. Using this information and the already known measurements of the cheese 2, the control system 23 can command the guide drive 11 to act in such a way that the peeling unit 6 stays at a constant distance from the cheese 2 during the peeling operation.

**Fig. 2c** is a schematic enlargement of the drawing of part of the device 1 in the situation where the part 19 of the plastic coating 3 is cut off. The blade 7 is moved along one of the vertical edges 107 of the fourth lateral surface 105 in order to cut off the part 19. The blade 7 cuts the cheese 2 on the first lateral surface 102 (see Fig. 1a) at a distance of one or two millimetres from the fourth lateral surface 105. The blade 7 is moved here along the line of displacement 17 in the direction of the arrow 26. The result of this action is that a strip is cut off from the plastic coating 3 to form the cut-off part 19 of the plastic coating 3. On one side, at the line of displacement 17, the plastic coating 3 of the cut-off part 19 is connected with the part of the plastic coating 3 covering the body 108 of the cheese 2. The width of the cut-off part 19, which corresponds to the distance between the line of displacement 17 and the edge 107 that is the closest to it, is preferably 1 cm.

**Fig. 2d** shows a schematic cross-sectional view taken along the line II-II in Fig. 2b in the situation where a part of the plastic coating 3 is peeled off the cheese 2. The arrows illustrated in the rollers 8 and 9 show the direction in which these rollers 8 and 9 rotate. This rotation introduces the plastic coating 3 into the peeling unit 6, comprising rollers 8 and 9. As the plastic coating 3 is clamped in between the rollers 8 and 9 and as these rollers are rotated, a tensile force (F_{peeling}) is exerted on the plastic coating. The peeling unit 6 grips the plastic coating 3 on both sides, since the first roller 8 grips the first side 21 of the plastic coating, and the second roller 9 grips the second side 22 of the plastic coating. In order to peel off the plastic coating 3, the tensile force (F_{peeling}) exerted by the peeling unit 6 should be greater than the force of adhesion (F_{adhesion}) between the plastic coating 3 and the body 108 of the cheese. Furthermore, the tensile force (F_{peeling}) exerted by the peeling unit 6 should be weaker than the force to rupture (Fᵣᵤₚₜᵤᵣₑ) of the plastic coating 3 in order to prevent the rupture of the plastic coating 3 during the peeling operation. Part 114 of the fourth lateral surface 105 has been peeled off from the third coating portion 111 of the cheese 2. The remaining lateral surfaces 102, 103 and 104 are still covered with the plastic coating 3 of the third portion 111 of the coating. The body 108 of the cheese is exposed over the peeled part 114 of the fourth lateral surface 105.

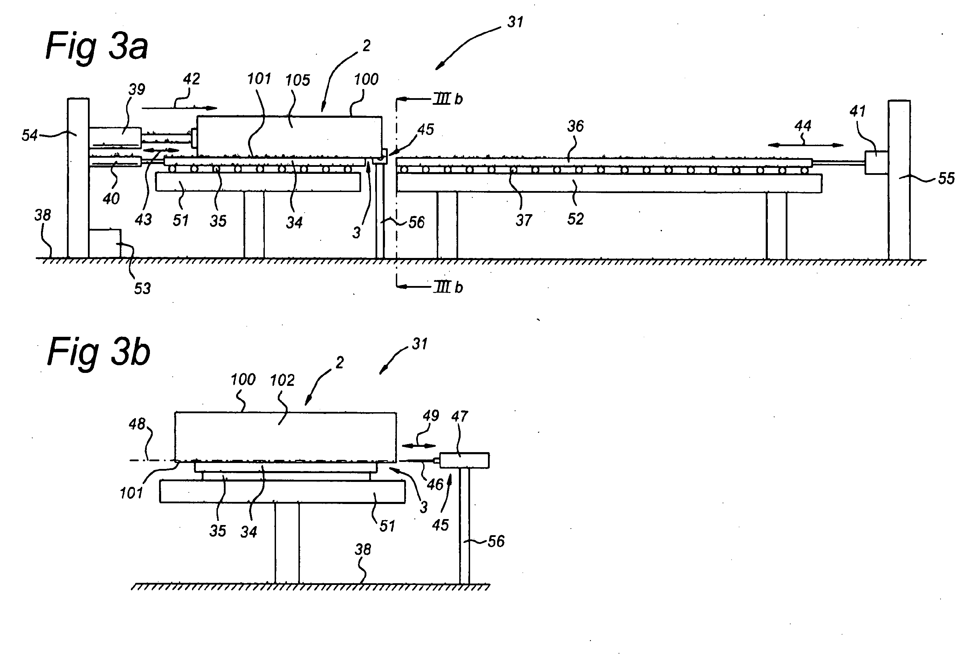

**Fig. 3a** shows a device 31 for peeling the plastic coating 3 off a cheese 2 as shown in Fig. 1b, and specifically from its top surface 100 and bottom surface 101, i.e. a device for peeling off the first portion 109 and the second portion 110 of the coating, respectively. The device comprises a second supporting plate 34 on which the cheese block 2 is positioned. The second supporting plate 34 is movably supported on the first rolls 35, which are in turn rotatably supported about their longitudinal axis by a first roll support 51, and this rests on a solid outside surface 38. To move the second supporting plate 34, the latter is connected to a first plate-moving tool 40, which is mounted for moving the second supporting plate 34 in the direction of the arrow 43. The device also comprises a cheese-moving tool 39 for the displacement of the cheese 2 in the direction of the arrow 42. Both the first plate-moving tool 40 and the cheese-moving tool 39 are connected to a first support 54 for the displacing unit, which support rests on a solid outside surface 38. In a line extending from the second supporting plate 34, the device 31 comprises a third supporting plate 36, which is movably supported by the second rolls 37, and the latter are rotatably supported by a second roll support 52 along their longitudinal axis. To move the third supporting plate 36, the latter is coupled to a second plate-moving tool 41, which is incorporated for displacing the second supporting plate 34 in the direction of the arrow 44. The second plate-moving tool 41 is connected to a second support 55 for the displacing tool, and this support in turn rests on a solid outside surface 38. The device 31 also comprises two cutting units 45, positioned near the cheese 2.

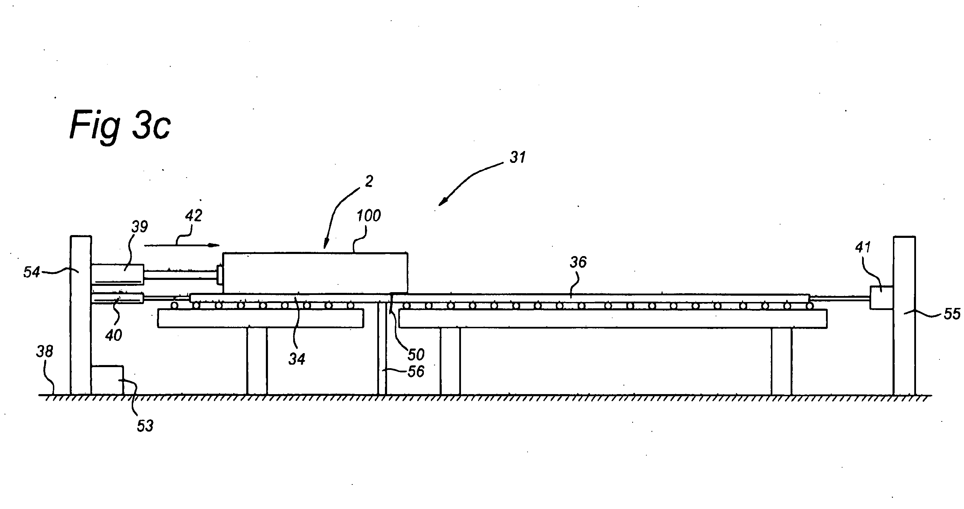

**Fig. 3b** is a schematic cross-sectional view taken along line III-III in Fig. 3a. The two cutting units 45 comprise a second blade 46, which is coupled to the blade-moving tool 47. This tool, the purpose of which is to move the blade 46 in the direction of the arrow 49, is coupled to a third support 56 for the displacing tool, where the support 56 rests on a solid outside surface 38. To use the second cutting unit 45, the cheese 2 is moved by the second positioning tool (not shown) to the right position on the second supporting plate 34. The second blade 46 is then moved from its fixed initial position with the aid of the blade-moving tool 47 along the second line of displacement 48 in such a way that - as in the case of the device shown in Fig. 2 -a narrow strip of the plastic coating 3 is cut off from the bottom surface 101. The second blade 46 in this case cuts the cheese 2 on its first lateral surface 102 at a distance of one or two millimetres from the bottom surface 101. After cutting it loose, this strip, shown by 50 in Fig. 3c, is only connected to the cheese 2 on one side. The shape of the second blade 46 is such that, after this operation of the second cutting unit 45, the second part 50 cut off from the plastic coating 3 projects from the cheese 2. In this case, a part of the second portion 110 of the coating is cut off, so that the cut-off part 50 projects from the bottom surface 101.

**Fig. 3c** is a schematic side view of the device 31 in the situation where the second cutting unit 45 has cut off a part 50 of the plastic coating from the bottom surface 101, and where the first and second plate-moving tools 40 and 41 have moved the second and third supporting plates 34 and 36 into a position opposite each other. In this position, the two supporting plates 34 and 36 are pressed together by the two plate-moving tools 40 and 41. Since the cut-off part 50 projects from the cheese 2, it gets clamped between the second and third supporting plates 34 and 36 when these two plates are moved as mentioned above. The cheese 2 is then displaced in the direction of the arrow 42 by the cheese-moving tool 39. In this case, the cheese 2 is moved from the second supporting plate 34 to its final position on the third supporting plate 36. During this displacement, the cut-off part 50 of the plastic coating gets clamped in between the supporting plates 34 and 36. As a result, a tensile force (F_{peeling}) is exerted on the plastic coating 3 during this displacement, so that the plastic coating 3 is peeled off from the cheese 2. Each of the two supporting plates 34 and 36 grips the plastic coating 3 on a different side, so that the peeling tools 34, 36 and 39 seize the plastic coating 3 on two sides from the device 31. The final position into which the cheese 2 is moved is on the third supporting plate 36, and the whole plastic coating 3 is peeled off from the bottom surface 101, which corresponds to the second portion 110 of the coating in Fig. 1b. To remove the plastic coating 3 from the top surface 100, which corresponds to the first portion 109 of the coating, the cheese 2 is raised from the third supporting plate 36 and is positioned on the second supporting plate 34, with the top surface 100 of the cheese 2 in the abovementioned initial position, so that the whole cycle described here can be repeated in the same way.

### EXAMPLES

### Example 1 - The values of F_{adhesion}, Fᵣᵤₚₜᵤᵣₑ and F_{elongation} for various types of cheese

These three F values were determined for Gouda cheese and Milner cheese at various stages of ripening, as sold by Campina in the Netherlands. These cheeses had been ripened in a protective PVA coating obtained from CSK Food (the Netherlands), and were stored at 4°C.

Five samples measuring 150 x 25 mm were cut off the top of each cheese, and an approximately 35-mm strip was removed from the plastic coating by hand.

This strip was fixed in the top clamp of a Texture Analyser TA-XT2 from Stable MicroSystems in Great Britain, using tensile grips. The part of cheese, laid bare over 35 mm, was fixed in the other clamp.

The top clamp was then moved upwards at a speed of 10 mm/sec at room temperature to remove the coating from the cheese. The other settings of the apparatus are shown in Table 1.

**Table 1 - Settings of the Texture Analyser and software**

| | **Peeling test** | **Tensile test** |
|---|---|---|
| Test mode | To measure the force in tension | To measure the force in tension |
| Test option | Return to start | Return to start |
| Pre-test speed, mm/sec | 2 | 2 |
| Test speed, mm/sec | 10 | 10 |
| Post-test speed, mm/sec | 10 | 10 |
| Trigger type | Auto | Auto |
| Trigger force, N | 0.3 | 0.3 |
| Break detect | - | Return/rate |
| Break sensitivity, N | - | 1 |
| Distance, mm | 100 | - |
| Initial distance between the clamps | 15 | 50 |

The adhesive force was measured over a length of 10 mm. The highest value was recorded and the force was firstly corrected for the width of the cheese sample by dividing the measured value (in N) by this width (in mm). This operation was then repeated with the four other samples of cheese. The highest value obtained for these five samples of each type of cheese is shown as F_{adhesion} in Table 2.

**Table 2 - Mechanical properties of Gouda and Milner cheese at different stages of ripening in a PVA coating, as measured in peeling and tensile tests**

| | **F_{adhesion}, N/mm** | **F_{rupture,} N/mm** | **F_{elongation}N/mm** |
|---|---|---|---|
| | **(peeling test)** | **(tensile test)** | |
| Gouda cheese | | | |
| Slightly ripened ("jong") | 0.26 | 0.41 | 0.17 |
| Slightly ripened mellow | | | |
| ("jong belegen") | 0.24 | 0.50 | 0.18 |
| Medium-ripened mellow | | | |
| ("belegen") | 0.67 | 0.28 | 0.10 |
| Extra-mellow ("extra belegen") | 0.79 | 1.07 | 0.29 |
| Well/mature ripened ("oud") | 0.63 | 0.99 | 0.29 |

| Milner cheese | | | |
|---|---|---|---|
| Slightly ripened | 0.57 | 0.25 | 0.13 |
| Ripened | 0.83 | 1.12 | 0.26 |
| Extra-ripened | 0.34 | 0.70 | 0.17 |

The coating was completely removed from the cheese and then cut into five samples measuring 100 x 15 mm. These samples were used for the tensile strength measurements in the same apparatus as in the previous case at a temperature of 21 °C, using the settings shown in Table 1.

The samples were fixed in the clamps, and the latter were pulled apart. The values of Fᵣᵤₚₜᵤᵣₑ and F_{elongation} were determined with the aid of the Texture Analyser.

The minimum values of these forces, normalized for the width of the sample, as determined in five measurements, are shown in Table 2.

The value of the adhesive force in the case of extra-ripe Milner cheese in Table 2 deviates from the normal picture, according to which the adhesive force increases with the duration of ripening. This is because the last part of the ripening of a Milner cheese is carried out in a film.

The data in Table 2 also show that F_{adhesion} was greater than Fᵣᵤₚₜᵤᵣₑ for medium-ripened mellow ("belegen") Gouda cheese and for slightly ripe Milner cheese, which indicates that it was impossible to remove the coating. In all other cases, Fᵣᵤₚₜᵤᵣₑ was greater than F_{adhesion}, but it was still insufficient to ensure a satisfactory peeling. Furthermore, an elongation of more than 10% was noted in all these cheese samples before the plastic coating became detached, which made peeling difficult or impossible.

### Example 2 - Reinforcing the plastic coating with a top layer

A hot-melt adhesive was applied to a slightly ripened ("young") Gouda cheese that had been ripened in a PVA coating for 4 weeks. The hot-melt adhesive used here was a self-adhesive food-grade product made by Dinxperlo in The Netherlands and sold under the trade name of Saba. This adhesive was heated to about 150°C in a melting tank and applied to the PVA coating with the aid of a Robatech sprayer (from Westervoort, The Netherlands) in a thickness of 30-40 g/m². Spraying and contact with the cheese cooled the hot-melt adhesive down.

Thirty seconds after the application of the hot-melt adhesive, the cheese was wrapped in a standard polypropylene (PP) packaging film with a thickness of 30 g/m², making sure that no creases were formed.

Again five samples were taken from this cheese for testing as described in Example 1.

The values found for Fᵣᵤₚₜᵤᵣₑ and F_{elongation} are listed in Table 3 in the form of their ratios with respect to F_{adhesion}, which was the F_{adhesion} value given in Table 2 for slightly ripened ("young") Gouda cheese.

These ratios were compared with the corresponding ratios for a slightly ripened ("young") Gouda cheese ripened in a PVA coating but without the top layer used above, and with a slightly ripened ("young") Gouda cheese to which an extra PVA layer was applied with a squirting device immediately before slicing, the thickness of this extra PVA layer being 120 g/m² in the wet state and about 60 g/m² later.

**Table 3 - Comparison of a plastic coating with and without a top layer**

| | **Fᵣᵤₚₜᵤᵣₑ/F_{adhesion}** | **F_{elongation}/F_{adhesion}** |
|---|---|---|
| Without the top layer | 1.6 | 0.7 |
| With a PP top layer | 13.7 | 6.3 |
| With a PVA top layer | 4.9 | 1 |

### Example 3 - Temperature profile of the cheese in the case of IR heating

A Gouda cheese ripened in a PVA coating and having a temperature of 5°C was heated by infrared radiation at a power of 70 kW/m² (100% output) for 1.5 seconds, after which it was heated through for another 15 seconds at a power of 5%, and then the IR heaters were switched off. The temperature of the surroundings was set at 5°C. The cheese had a coating with a thickness of about 0.2 mm, and an approximately 5-mm thick rind.

The temperature during the IR heating was measured at various depths of the coating, the rind and the body of the cheese, and the results are shown in Table 4.

**Table 4 - Temperature profile of cheese during IR heating, °C**

| | | After IR heating at 100% output | | After IR heating at 5% output | | | |
|---|---|---|---|---|---|---|---|
| | Depth, mm | Temperature (°C) at t=0 | t=1.5s, °C | t=5s, °C | t=10s, °C | t=15s,°C | t=16.5s, °C |
| Coating | 0.02 | 5 | 23.9 | 20.6 | 21.3 | 22.2 | 22.5 |
| | 0.06 | 5 | 23.6 | 20.6 | 21.3 | 22.2 | 22.5 |
| | 0.1 | 5 | 23 | 20.6 | 21.3 | 22.2 | 22.5 |
| | 0.14 | 5 | 22.2 | 20.5 | 21.3 | 22.1 | 22.4 |
| | 0.18 | 5 | 21.1 | 20.5 | 21.2 | 22.1 | 22.4 |
| | | | | | | | |
| Rind | 0.7 | 5 | 19.7 | 20.4 | 21.1 | 22 | 22.3 |
| | 1.7 | 5 | 10.4 | 11.9 | 13.6 | 15 | 15.3 |
| | 2.7 | 5 | 7.13 | 7.75 | 8.73 | 97 | 9.99 |
| | 3.7 | 5 | 5.85 | 6.1 | 6.51 | 6.99 | 7.14 |
| | 4.7 | 5 | 5.34 | 5.43 | 5.58 | 5.77 | 5.83 |
| | | | | | | | |
| Cheese | 7.2 | 5 | 5.07 | 5.09 | 5.13 | 5.17 | 5.19 |
| | 11.2 | | 5 | 5 | 5.01 | 5.01 | 5.01 |
| | 15.2 | 5 | 5 | 5 | 5 | 5 | 5 |
| | 19.2 | 5 | 5 | 5 | 5 | 5 | 5 |
| | 23.2 | 5 | 5 | 5 | 5 | 5 | 5 |

### Comparative example - Temperature profile of the cheese after heating with hot air

Example 3 was repeated, but the cheese was heated with hot air at a temperature of 30°C instead.

These results showed a completely different picture. A time of 7000 sec was needed here to obtain a coating temperature comparable to that achieved after the above IR heating (23.9°C). During this hot-air treatment, the temperature of the rind and the body of the cheese rose from 5 to 21 °C at a depth of 0.5 mm and to 11 °C at a depth of 23 mm. The whole cheese was considerably warmer than after the IR treatment.

## Claims

1. Process for removing the plastic coating from cheese by peeling, in which the plastic coating is removed from the cheese rind, which process comprises the following steps:
a. ripened cheese with a plastic coating that is suitable for use in ripening is provided, where the "force before rupture" (Fᵣᵤₚₜᵤᵣₑ) of the plastic coating is greater than the force of adhesion (F_{adhesion}) between the said plastic coating and the cheese; and
b. the cheese is peeled with a peeling force (F_{peeling}) that is greater than F_{adhesion} but smaller than Fᵣᵤₚₜᵤᵣₑ,
wherein the plastic coating also has a "force for a 10% elongation" (F_{elongation}) that is greater than F_{peeling}, and
wherein the plastic coating has a temperature during the peeling operation in Step b) which is higher than its glass temperature but lower than 30°C and wherein said temperature is achieved by infrared (IR) heat treatment.

2. Process according to Claim 1, wherein the IR heat treatment comprises a power of 60-80 kW/m² over a period of 0.5-5 seconds, preferably followed by an IR heat treatment at 5-10% of the first power for a period of 5-30 seconds.

3. Process according to any one of the preceding claims, wherein the plastic coating during the peeling in Step b) has a temperature which is in the range of 20-25°C.

4. Process according to any one of the preceding claims, wherein the cheese with plastic coating is reinforced with a top layer before Step a) is carried out.

5. Process according to any one of the preceding claims, wherein the step of peeling the cheese comprises two-sided gripping of the plastic coating.

6. Process according to any one of the preceding claims, wherein the following operations are carried out before peeling the cheese:
- the plastic coating is ruptured in such a way that it is divided into a number of portions of coating; and
- a part is cut off from one of these portions of the coating.

7. Device for removing a plastic coating from cheese covered with it, wherein the plastic coating is removed from the cheese rind, and wherein the device comprises peeling tools, which are equipped for exerting a tensile force on the plastic coating when it is in operation, **characterized in that** the peeling tools comprise two rollers mounted essentially parallel to each other.

8. Device according to Claim 7, comprising infrared (IR) radiators.

9. Device according to Claim 7 or 8, wherein the peeling tools are equipped for two-sided gripping of the plastic coating when it is in operation.

10. Device according to any one of Claims 7-9, comprising a cutting tools for cutting off a part of the plastic coating when it is in operation.

11. Device according to any one of Claims 7-10, comprising a rupturing tool to rupture the plastic coating in such a way as to divide the plastic coating into parts of the coating, when it is in operation.

12. Device according to any one of Claims 7-11, wherein the peeling tools comprise a tensile force regulator for adjusting the tensile force exerted by the said peeling tools.

## Patentansprüche

1. Prozess zur Entfernung der Plastikbeschichtung von Käse durch Abziehen, wobei die Plastikbeschichtung von der Käserinde abgezogen wird, wobei der Prozess die folgenden Schritte umfasst:
a. gereifter Käse mit einer Plastikbeschichtung, die zur Benutzung beim Reifen geeignet ist, wird vorgesehen, wo die Reißfestigkeit (F_{Reiß}) der Plastikbeschichtung größer ist als die Adhäsionskraft (F_{Adhäsion}) zwischen der genannten Plastikbeschichtung und dem Käse; und
b. der Käse mit einer Schälkraft (F_{Schäl}) geschält wird, die größer ist als F_{Adhäsion}, aber kleiner als F_{Reiß},
wobei die Plastikbeschichtung ebenso eine "Kraft für 10-prozentige Längung" (F_{Längung}) hat, die größer ist als F_{Abzieh}, und
wobei die Plastikbeschichtung während der Schäloperation in Schritt b) eine Temperatur hat, die höher ist als ihre Glasungstemperatur, aber niedriger als 30° C und wobei diese Temperatur erreicht wird durch Infrarot (IR)-Wärmebehandlung.

2. Prozess nach Anspruch 1, wobei die IR-Wärmebehandlung eine Leistung von 60 - 80 kW/m² über eine Dauer von 0,5 - 5 Sek. hat, vorzugsweise gefolgt von einer IR-Wärmebehandlung mit 5 - 10 % der ersten Leistung für eine Dauer von 5-30 Sek.

3. Prozess nach einem der vorhergehenden Ansprüche, wobei die Plastikbeschichtung während des Schälens in Schritt b) eine Temperatur hat, die im Bereich von 20 - 25° C liegt.

4. Prozess nach einem der vorhergehenden Ansprüche, wobei der Käse mit Plastikbeschichtung mit einer Deckschicht verstärkt ist, bevor Schritt a) durchgeführt wird.

5. Prozess nach einem der vorhergehenden Ansprüche, wobei der Schritt, bei dem der Käse geschält wird, das zweiseitige Erfassen der Plastikbeschichtung umfasst.

6. Prozess nach einem der vorhergehenden Ansprüche, wobei vor dem Schälen des Käses die folgenden Operationen durchgeführt werden:
- die Plastikbeschichtung wird gebrochen, so dass sie in eine Anzahl von Beschichtungsabschnitten unterteilt ist; und
- von einem dieser Abschnitte der Beschichtung wird ein Teil abgeschnitten.

7. Gerät zum Entfernen einer Plastikbeschichtung von Käse, der damit bedeckt ist, wobei die Plastikbeschichtung von der Käserinde entfernt wird und wobei das Gerät Schälwerkzeuge umfasst, die ausgerüstet sind, um eine Zugkraft auf die Plastikbeschichtung auszuüben, wenn es in Betrieb ist, **dadurch gekennzeichnet, dass** die Schälwerkzeuge zwei Walzen umfassen, die im Wesentlichen parallel zueinander montiert sind.

8. Gerät nach Anspruch 7, umfassend Infrarot (IR)-Strahler.

9. Gerät nach Anspruch 7 oder 8, wobei die Schälwerkzeuge zum zweiseitigen Erfassen der Plastikbeschichtung ausgerüstet sind, wenn es in Betrieb ist.

10. Gerät nach einem der Ansprüche 7-9, umfassend ein Schneidwerkzeug zum Abschneiden eines Teils der Plastikbeschichtung, wenn es in Betrieb ist.

11. Gerät nach einem der Ansprüche 7-10, umfassend ein Brechwerkzeug, um die Plastikbeschichtung derart zu brechen, dass die Plastikbeschichtung in Beschichtungsteile geteilt wird, wenn es in Betrieb ist.

12. Gerät nach einem der Ansprüche 7-11, wobei die Schälwerkzeuge einen Zugkraftregulator umfassen, um die Zugkraft, die von den genannten Schälwerkzeugen ausgeübt wird, zu justieren.

## Revendications

1. Procédé pour retirer le revêtement en matière plastique du fromage, par pelage, selon lequel, on enlève le revêtement en matière plastique de la peau du fromage,
procédé comprenant les étapes suivantes :
a. laisser séjourner le fromage à maturation avec son revêtement en matière plastique qui convient à cet effet et selon lequel, la "force avant rupture" (Fᵣᵤₚₜᵤᵣₑ) du revêtement en matière plastique est supérieure à la force d'adhérence (F_{adhérence}) entre le revêtement en matière plastique et le fromage, et
b. on pèle le fromage avec une force de pelage (P_{elage}) supérieure à la force d'adhérence (F_{adhérence}) mais inférieure à la force avant rupture (Fᵣᵤₚₜᵤᵣₑ),
le revêtement en matière plastique a également "une force pour un allongement de 10 %" (F_{allongement}) supérieure à la force de pelage, et
le revêtement en matière plastique a une température au cours de l'opération de pelage selon l'étape b) supérieure à la température vitreuse mais inférieure à 30°C, et
selon lequel
la température est obtenue par un rayonnement infrarouge (IR).

2. Procédé selon la revendication 1,
selon lequel
le traitement par rayonnement thermique infrarouge consiste à appliquer une puissance de 60 à 80 kW/m² pendant une période de 0,5 à 5 secondes et de préférence suivie par un traitement thermique aux infrarouges IR de 5 % à 10 % de la première puissance appliquée pendant une période de 5 à 30 secondes.

3. Procédé selon les revendications précédentes,
selon lequel
le revêtement en matière plastique au cours de l'étape de pelage b) est à une température de l'ordre de 20°C à 25°C.

4. Procédé selon les revendications précédentes,
selon lequel
on renforce le fromage par un revêtement en matière plastique avec une couche supérieure avant d'effectuer l'étape a).

5. Procédé selon les revendications précédentes,
selon lequel
l'étape de pelage du fromage consiste à saisir le revêtement en matière plastique sur deux côtés.

6. Procédé selon les revendications précédentes,
selon lequel
on effectue les opérations suivantes avant de peler le fromage :
- rompre le revêtement en matière plastique de façon à le diviser en un certain nombre de parties de revêtement, et
- enlever par découpe un morceau de l'une des parties du revêtement.

7. Dispositif pour retirer le revêtement en matière plastique de fromage muni d'un tel revêtement,
selon lequel
on enlève le revêtement en matière plastique de la peau du fromage, et le dispositif comporte des outils de pelage équipés de manière à exercer une force de traction sur le revêtement en matière plastique pendant le fonctionnement,
**caractérisé en ce que**
les outils de pelage, comportent deux galets montés essentiellement parallèlement l'un à l'autre.

8. Dispositif selon la revendication 7, comportant des radiateurs de rayonnement infrarouge (IR).

9. Dispositif selon la revendication 7 ou 8,
selon lequel
les outils de pelage sont équipés pour pincer sur les deux côtés le revêtement en matière plastique pendant son fonctionnement.

10. Dispositif selon les revendications 7 à 9, comportant des outils de coupe pour découper un morceau du revêtement en matière plastique pendant son fonctionnement.

11. Dispositif selon les revendications 7 à 10, comportant un outil de rupture pour casser le revêtement en matière plastique de façon à le diviser en plusieurs parties pendant son fonctionnement.

12. Dispositif selon les revendications 7 à 11,
selon lequel
les outils de pelage comportent un régulateur de force pour régler la force de traction exercée par les outils de pelage.
